(19) Europäisches Patentamt
European Patent Office
Office européen des brevets

(11) Publication number: 0 002 357 B1

(12) **EUROPEAN PATENT SPECIFICATION**

(45) Date of publication of patent specification: 01.09.82

(51) Int. Cl.³: C 08 L 23/32, C 08 K 5/17, C 08 K 5/21

(21) Application number: 78300688.5

(22) Date of filing: 28.11.78

(54) **Plasticization of neutralized sulfonated elastomeric polymer.**

(30) Priority: 29.11.77 US 855547
29.11.77 US 855693

(43) Date of publication of application:
13.06.79 Bulletin 79/12

(45) Publication of the grant of the patent:
01.09.82 Bulletin 82/35

(84) Designated Contracting States:
BE DE FR GB NL

(56) References cited:
GB - A - 861 542
US - A - 2 723 257
US - A - 3 642 728
US - A - 3 654 214
US - A - 3 847 854
US - A - 3 870 841

(73) Proprietor: Exxon Research and Engineering Company
P.O.Box 390 180 Park Avenue
Florham Park New Jersey 07932 (US)

(72) Inventor: Brenner, Douglas
61 E. Sherbrooke Parkway
Livingston New Jersey (US)

(74) Representative: Field, Roger Norton et al,
ESSO Engineering (Europe) Ltd. Patents & Licences Apex Tower High Street
New Malden Surrey KT3 4DJ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 002 357 B1

# Plasticization of neutralised sulphonated elastomeric polymer

Recently a new class of thermoelastic sulphonated polymers has been described in a number of U.S. patents, for example U.S. 3,847,854. This patent concerns an ionically cross-linked sulphonated elastomeric polymer combined with one or more of a certain class of preferential plasticizers.

U.S. 3,847,854 describes the problem of melt processability in metal sulphonate containing elastomers and a large number of materials are claimed as plasticizers that would give the ionomers lower melt viscosities at processing temperatures and thereby permit melt fabrication. However, many of the materials included are relatively poor flow improvers. It also teaches that no more than 6—7 wt.% of a non-volatile plasticizer should be used in order to avoid plasticisation of the polymer backbone.

It has been found that among a large number of non-volatile functional organic compounds that critically selected organic amines, organic ureas or organic thioureas provide for an excellent balance of markedly improved flow properties and at the same time good physical properties. Contrary to the teachings of U.S. 3,847,854 these amines, ureas or thioureas can be used at concentrations far beyond 6—7 parts by weight of amines, ureas or thiourea/100 parts by weight of polymer.

This present invention relates to unique and novel elastomeric compositions of a metal neutralized sulfonated elastomeric polymer being plasticized with a critically selected non-volatile amine, an organic urea or thiourea wherein the compositions exhibit not only a substantial improvement in flow properties but unexpected and substantial improvements in physical properties. Thus, essentially intractable sulfonated polymer can be made to process readily in conventional molding or extrusion operations.

According to this invention an elastomeric composition comprises

(a) a neutralised sulphonated elastomeric polymer having 10 to 60 meq. sulphonate groups per 100 grams of said sulphonated elastomeric polymer, said sulphonate groups being neutralized with metal cations; and

(b) 5 to 75 parts by weight of an organic urea or thiourea having the formula

$$R_1NH—\underset{\underset{A}{\|}}{C}—NHR_2$$

per 100 parts of said neutralized sulphonated elastomeric polymer, wherein A is oxygen or sulphur and $R_1$ and $R_2$ are the same or different and are an alkyl group, an aralkyl group or an aryl group, provided that if $R_1$ and $R_2$ are both alkyl groups, then at least one of them must be a $C_{12}$ to $C_{22}$ alkyl group or 8 to 75 parts by weight of a primary n-alkyl amine based on 100 parts of said neutralized sulphonated elastomeric polymer, wherein the alkyl group of said n-alkylamine has at least 20 carbon atoms per molecule, provided the urea, thiourea or n-alkyl amine is solid at ambient temperature.

The metal and ammonium neutralized sulfonated elastomeric polymers of this present invention are derived from unsaturated polymers which include low unsaturated elastomeric polymers such as Butyl rubber, or EPDM terpolymers.

The expression "Butyl rubber" as employed in the specification and claims is defined as copolymers made from a polymerization reaction mixture having therein from 70 to 95.5% by weight of an isoolefin which has about 4 to 7 carbon atoms per molecule, e.g. isobutylene and 0.5 to 30% by weight of a conjugated multiolefin having from 4 to 14 carbon atoms per molecule, e.g. isoprene. The resulting copolymer contains 85 to 99.8% by weight of combined isoolefin and 0.2 to 15% of combined multiolefin.

Butyl rubber generally has a Staudinger molecular weight of 20,000 to 500,000, preferably 25,000 to 400,000 especially about 100,000 to 400,000 and a Wijs Iodine No. of 0.5 to 50, preferably 1 to 15. The preparation of Butyl rubber is described in U.S. Patent 2,356,128.

For the purposes of this invention, the Butyl rubber may have incorporated therein from 0.2 to 10% preferably 0.5 to 6%; more preferably 1 to 4%, e.g. 2% of combined multiolefin.

Illustrative of such a Butyl rubber is Exxon Butyl 365 (Exxon Chemical Co.), having a mole percent unsaturation of 2.0% and a Mooney viscosity (ML, 1+8, 100°C (212°F)) of 40—50. "Exxon" is a registered Trade Mark at least in the United Kingdom.

Low molecular weight Butyl rubbers, i.e. Butyl rubbers having a Viscosity average molecular weight of 5,000 to 85,000 and a mole percent unsaturation of 1 to 5% may be sulfonated to produce the polymers useful in this invention. Preferably, these polymers have a viscosity average molecular weight of 25,000 to 60,000.

The "EPDM terpolymer" as used in the specification and claims is a low unsaturated polymer having 1 to 10.0 wt.% olefinic unsaturation, preferably 2 to 8%, more preferably 3 to 7% defined according to the definition as found in ASTM—D—1418—64 and means terpolymers containing ethylene and propylene in the backbone and a diene in the side chain. Illustrative methods for producing these terpolymers are found in U.S. Patent 3,280,082, British Patent 1,030,289 and French Patent 1,386,600. The preferred polymers contain 40 to 80 wt.% ethylene and 1 to 10 wt.% of a diene

monomer, the balance of the polymer being propylene. Preferably, the polymer contains 45 to 75 wt.% ethylene, e.g. 50 wt.% and 2.6 to 8.0 wt.% diene monomer, e.g. 5.0 wt.%. The diene monomer is preferably a non-conjugated diene.

Illustrative of these non-conjugated diene monomers which may be used in the terpolymer (EPDM) are 1,4-hexadiene, dicyclopentadiene, an alkylidene substituted norbornene, e.g. 5-ethylidene, 2-norbornene, 5-methylene-2-norbornene, an alkenyl substituted norbornene e.g., 5-propenyl-2-norbornene, tetrahydroindene and methyl tetrahydroindene.

A typical EPDM is Vistalon 2504 (Exxon Chemical Co.) a terpolymer having a Mooney viscosity (ML, 1+8, 100°C (212°F)) of 50 and having an ethylene content of 50 wt.% and 5-ethylidene-2-norbornene content of 5.0 wt.%. The $\overline{M}n$ of Vistalon 2504 is 47,000, the $\overline{M}v$ is 145,000 and the $\overline{M}w$ is 174,000. "Vistalon" is a registered Trade Mark at least in the United Kingdom.

Another EPDM terpolymer Vistalon 2504—20 is derived from V—2504 (Exxon Chemical Co.) by a controlled extrusion process, wherein the resultant Mooney viscosity at 100°C (212°F) is 20. The $\overline{M}n$ of Vistalon 2504—20 is 26,000, the $\overline{M}v$ is 90,000 and the $\overline{M}w$ is 125,000.

Nordel 1320 (duPont) is another terpolymer having a Mooney viscosity at 100°C (212°F) of 25 and having 53 wt.% of ethylene, 3.5 wt.% of 1,4-hexadiene, and about 43.5 wt.% of propylene. "Nordel" is a registered Trade Mark at least in the United Kingdom.

The EPDM terpolymers of this invention have a number average molecular weight ($\overline{M}n$) of 10,000 to 200,000, more preferably of 15,000 to 100,000, most preferably of 20,000 to 60,000. The Mooney viscosity (ML, 1+8, 100°C (212°F)) of the EPDM terpolymer is 5 to 60, more preferably 10 to 50, and most preferably 15 to 40. The $\overline{M}v$ of the EPDM terpolymer is preferably below 350,000 and more preferably below 500,000 and more preferably below 350,000.

One means for carrying out the sulfonation process is to dissolve the elastomeric polymer in a non-reactive solvent such as a chlorinated aliphatic hydrocarbon, chlorinated aromatic hydrocarbon, an aromatic hydrocarbon, or an aliphatic hydrocarbon such as carbon tetrachloride, dichloroethane, chlorobenzene, toluene, cyclohexane, pentane, isopentane, hexane, isohexane, or heptane. The preferred solvents are the lower boiling aliphatic hydrocarbons. A sulfonating agent is added to the solution of the elastomeric polymer and nonreactive solvent at a temperature of −10°C. to 100°C. for a period of time of 1 to 60 minutes, more preferably at room temperature for 5 to 45 minutes; and most preferably 15 to 30. Typical sulfonating agents are described in U.S. Patents 3,642,728 and 3,836,511. These sulfonating agents are selected from an acyl sulfate, a mixture of sulfuric acid and an acid anhydride or a complex of a sulfur trioxide donor and Lewis base containing oxygen, sulfur or phosphorous. Typical sulfur trioxide donors are $SO_3$, chlorosulfonic acid, fluorosulfonic acid, sulfuric acid, oleum, etc. Typical Lewis bases are: dioxane, tetrahydrofuran, tetrahydrothiophenol, or triethylphosphate. The most preferred sulfonation agent for the invention is an acyl sulfate selected from the group consisting essentially of benzoyl, acetyl, propionyl or butyryl sulfate. The acyl sulfate can be formed in situ in the reaction medium in a chlorinated aliphatic or aromatic hydrocarbon.

It should be pointed out that neither the sulfonating agent nor the manner of sulfonation is critical, provided that the sulfonating method does not degrade the polymer backbone. The reaction is quenched with an aliphatic alcohol such as methanol, ethanol, isopropanol, with an aromatic hydroxyl compound, such as phenol, a cyclo aliphatic alcohol such as a cyclohexanol or with water. The sulfonated elastomeric polymer has 10 to 60 meq sulfonate groups per 100 grams of sulfonated polymer, more preferably 15 to 50; and most preferably 20 to 40. The meq of sulfonate groups/100 grams of polymer is determined by both titration of the polymeric sulfonate and Dietert Sulfur analysis. In the titration of the sulfonated polymer the polymer is dissolved in a solvent consisting of 95 parts by volume of toluene and 5 parts by volume of methanol at a concentration level of 50 grams per liter of solvent. The sulfonated polymer is titrated with ethanolic sodium hydroxide to an Alizarin-Thymolphthalein endpoint.

Neutralization of the sulfonated elastomeric polymer is done, for example, by the addition of a solution of neutralizing agent such as a metal acetate to the sulfonated elastomeric polymer dissolved in the mixture of the aliphatic alcohol and non-reactive solvent. The metal acetate is dissolved in a bindary solvent system consisting of water and/or an aliphatic alcohol. Typically, but non-limiting metal acetates are sodium acetate, barium acetate, magnesium acetate, aluminum acetate, potassium acetate, lead acetate, and zinc acetate, wherein zinc acetate is preferred. In general the cation used for neutralisation is a metal from groups 1A, 11A, 1B or 11B of the Periodic Table, lead antimony or iron.

Sufficient neutralizing agent is added to the solution of the sulfonated elastomeric polymer to effect neutralization of the sulfonated groups. It is preferable to neutralize at least 95% of the sulfonated groups, more preferably 98%, most preferably 100%. Metal oxides and hydroxides such as ZnO and $Mg(OH)_2$ can also be employed to effect the neutralization of the sulfonate groups.

The resultant neutralized sulfonated terpolymer has a melt viscosity which is dependent upon the molecular weight of the base polymer, the level of sulfonation, and the associated cation. An EPDM with an original Mooney viscosity (ML, 1+8, 100°C (212°F)) of 55, containing 40 meq. sulfonate/100 g EPDM and possessing cations such as mercury, magnesium, calcium, cobalt, lithium, barium, sodium and the like may crumble upon leaving a capillary rheometer at 220°C. at a shear rate of 0.73 $sec^{-1}$ and will possess an apparent viscosity in excess of $5 \times 10^6$ poise. An EPDM with an original Mooney

viscosity (ML, 1+8, 100°C (212°F)) of 20, containing 30 meq. sulfonate/100 g. EPDM, and possessing cations such as zinc, or lead ammonium possess apparent viscosities of from $10^6$ to $10 \times 10^6$ poise at a shear rate of 0.73 $sec^{-1}$ at 200°C.

On the other hand the physical properties of the unplasticized sulfonated and neutralized elastomers improve with increasing sulfonate content.

Good development of physical properties usually start to occur when 20 meq. sulfonate/100 g polymer are present, and the physical properties obtained at 30 meq. sulfonate/100 g. polymer and higher are preferred. However, even at these higher levels of sulfonate the unplasticized neutralized sulfonated elastomers still possess relatively modest physical properties, and the melt viscosities are so high that mixing or processing these gums in the absence of a plasticizer on conventional equipment is extremely difficult if not impossible.

The melt viscosities of the systems investigated herein were determined through the use of a standard melt index apparatus at 190°C, and generally at 17.6 kg/$cm^2$ (250 psi). Materials possessing a melt index under these conditions of very roughly 0.2 g/10 min. or greater can be considered mixable with plasticizers, fillers, extender oils, and other additives in high intensity, high shear rate mixers.

The organic urea or thiourea used are those with the general structure

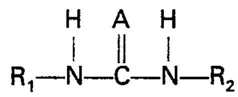

wherein

A is oxygen or sulfur, and $R_1$ and $R_2$ which can be the same or different are aralkyl groups such as benzyl, aryl groups such as phenyl, or alkyl groups such as octadecyl. In the case that both $R_1$ and $R_2$ are alkyl groups, at least one of them must be a $C_{12}$ to $C_{22}$ alkyl, more preferably $C_{16}$ to $C_{22}$ alkyl, and most preferably $C_{18}$ to $C_{22}$ alkyl and mixtures thereof. A preferred urea plasticizer is dibenzyl urea and preferred thioureas are 1,3-didodecyl-2-thiourea, and N,N′ di-p-tolylthiourea.

In order to exhibit the substantial improvements in the balance of melt processability and physical properties the organic urea or thiourea must at least be solid at room temperature and preferably possess melting points of 50°C and higher, most preferably 70°C or higher.

In order to achieve an enhanced balance of good melt flow combined with satisfactory physical properties it is essential to incorporate the organic urea or thiourea into the neutralized sulfonated elastomer at 5 to 75, preferably at 5 to 50, and more preferably at 8 to 30 parts by weight per hundred of the sulfonated polymer.

Improvements in flow while maintaining satisfactory physical properties are obtainable with a variety of cations. Of the many useful cations Zn, Pb, Ba, Ca, K, Mg and Na are preferred. Most preferred is the Zn sulfonate which provides organic urea or thiourea plasticized gums with good physical properties and ready melt processability.

The amines used are primary n-alkyl amines, wherein alkyl group has at least 20 carbon atoms. Preferred amine plasticizers are arachidylamine and behenylamine.

In order to exhibit the substantial improvements in processability and physical properties the critically selected amines must at least be solids at room temperatures and preferably have melting points of at least 70°C.

In order to achieve good melt flow and physical properties it is essential to incorporate the critically selected amine into the neutralized sulfonated elastomer at 8 to 75, preferably at 9 to 50, and more preferably at 10 to 30 parts by weight per hundred of the sulfonated polymer.

Improvements in flow and physical properties with amine plasticizers are obtainable with a variety of cations. Of the many useful cations, Zn, Pb, Ba, Ca, Mg, K, and Na are preferred. Most preferred is the Zn sulfonate which provides organic amine plasticized gums with good physical properties and ready melt processability.

The amines, ureas or thioureas can be incorporated into the unplasticized gums in a number of ways. One means is the addition of the amide to the cement of the sulfonated and neutralized polymer prior to its isolation during the manufacturing process. The resultant plasticized polymer can still have sufficiently high viscosity and integrity at the usual temperatures of drying so that it could be easily and conveniently dried in a tumble dryer or fluid bed dryer with hot air at for example 100°C. Yet the plasticized polymer can be made to possess sufficiently low viscosity so that it may be dewatered and dried in a dewatering extruder.

Amines, ureas or thioureas can also be added to the gums through the solution of already isolated and dried unplasticized gums and the addition of the amine to this solution. The resultant blend is isolated in the usual manner. Alternatively in cases where the unplasticized gums do not possess too high of a viscosity, it is possible to flux the gum and the amine in high intensity, high shear mixers such as Banbury mixers and Farrell continuous mixers.

EXAMPLE 1

PREPARATION OF A NEUTRALIZED LIGHTLY SULFONATED POLYMER

An EPDM was used as the backbone elastomeric polymer. It had a composition of about 52 wt.% ethylene, 43 wt.% propylene and 5 wt.% of 5-ethylidene-2-norbornene, and it had a Mooney viscosity ML @ 100°C (1+8 min.) of 20. This base polymer was lightly sulfonated using acetyl sulfate in accordance with the method disclosed in U.S. Patent 3,836,511, to a sulfonate level of 32 meq. per 100 g. of base polymer. The acid form of this lightly sulfonated elastomer was neutralized in solution by the addition of excess zinc acetate at a concentration of 60 meq. per 100 g. of polymer. This material was steam stripped and then dried in a fluidized bed hot air drier. This material was utilized for the preparation of some of the samples which are described in the following examples. This zinc neutralized lightly sulfonted EPDM was quite tough even at elevated temperatures, and it was too intractable to be fabricated by rapid polymer processing techniques such as extrusion or injection molding.

EXAMPLE 2

MELT INCORPORATION OF ARACHIDYLAMINE INTO A NEUTRALIZED LIGHTLY SULFONATED POLYMER

45.8 g of the neutralized lightly sulfonated polymer in a crumb form prepared in Example 1 was briefly mixed in a beaker with a spatula with 8.2 g of powdered arachidylamine. This was a concentration of 60 meq. of arachidylamine per 100 g of gum, or 15.2 wt.% additive. This blend was added to a Brabender Plasticorder having a 60 cc mixing head with Banbury mixers. The material was mixed at 160°C. and 50 RPM. Very rapidly the material fused into a coherent melt which mixed very well in the mixing head and resulted in excellent dispersion of the additive. Six minutes after the addition of the blend to the mixer had been completed, mixing was terminated. Then the material was sheeted out by a single pass through a two-roll mill having about 1 mm (0.040 inch) roll separation.

EXAMPLE 3

PREPARATION OF TEST SAMPLES, AND MEASUREMENT OF FLOW AND TENSILE PROPERTIES OF A LIGHTLY SULFONATED EPDM PLASTICIZED WITH ARACHIDYLAMINE AT HIGH CONCENTRATIONS

Arachidylamine was incorporated into samples of the neutralized sulfonated EPDM described in Example 1, using procedures similar to those described in Example 2. Good mixing was obtained in each case, and homogeneous materials were produced in each mix. Test pads were made from each of these samples prepared in Example 2, by compression molding at 177°C (350°F). The procedure was to preheat the empty mold plates in the press for a few minutes, then the material was put in the mold and the mold containing the material was preheated in the press with the mold plates slightly open for two minutes. Then the mold plates were pressed closed under a force of about 20 metric tons for two minutes. The samples were cooled in the molds under pressure for two minutes. Microtensile pads having a thickness of 0.6 mm and test regions measuring 2.54 mm in width and 12.7 mm in lengths were cut from the test pads with a die. The samples were stored in closed dry bottles for one or more days prior to tensile testing.

Tensile strengths of the samples were measured with an Instron Tm table model instrument, using a pulling speed of 51 mm per minute. "Instron" is a registered Trade Mark at least in the United Kingdom. Measurements were made at room temperature (25°C), and also at a higher temperature to determine the usefulness of the material at elevated temperature. In the measurements at elevated temperature, after being placed in the testing oven, 3 minute waiting period was allowed before pulling to enable the sample to equilibrate with the oven temperature. The elevated temperature utilized in most measurements was 70°C.

Melt flow rates for the various materials were determined at 190°C. which is in the range of typical processing temperatures for lightly sulfonated EPDM. The melt index instrument specified in ASTM 1238—70 was used, with the standard capillary. The weight of the probe plus the added weight was 12.5 kilograms. Flow rates were measured electronically as probe displacement per minute, and these results were converted to grams per 10 minutes using a conversion factor.

The melt flow rates and tensile properties for the plasticized lightly sulfonated EPDM samples are shown in Table I. These results show that a lightly sulfonated EPDM material plasticized with high concentrations of various substituted amines result in much improved melt flow rates, over 30 times that of the non-plasticized gum, resulting in much better processability at fabrication temperatures. It can also be seen from Table I that the room temperature tensile strengths are far above that of the nonplasticized sulfonated gum.

The gum plasticized with the arachidylamine is recommended for applications which will involve use in the vicinity of room temperature, or for low temperature applications because of its poor strength at 70°C. Presumably the poor strength of the arachidylamine at 70°C. is a result of its relatively low melting point.

TABLE I

TENSILE AND MELT FLOW PROPERTIES OF A SULFONATED EPDM

PLASTICIZED WITH ARACHIDYLAMINE AT HIGH CONCENTRATION

| | | | Tensile Properties[2] | | | | | |
|---|---|---|---|---|---|---|---|---|
| | | | 25°C. | | | 70°C. | | |
| Additive | Conc. Wt. % | Melt Flow Rate[1] (g/10 min) | Strength (psi)* | Elong. (%) | Initial Modulus[3] (psi)* | Strength (psi)* | Elong. (%) | Initial Modulus (psi)* |
| Arachidylamine | 15.2 | 1.5 | 1520 | 585 | 815 | 42 | 740 | 155 |
| None | | 0.007 | 650 | 250 | 385 | 305 | 310 | 310 |

[1] ASTM 1238–70, Standard Capillary, 190°C 17.6 kg/cm² (250 psi)

[2] Microdumbbell, about 0.559 mm (22 mils) thick, 2.5 mm (0.1 inch) wide, 12.7 mm (0.5 inch) long straight test region Pulled at 51.4 mm (2 inches) minute

[3] Modulus determined from initial steepest slope of the stress-strain curve

* The equivalent value in kg/cm² can be obtained by multiplying by 0.07

EXAMPLE 4
(Comparison)
A CLASS OF AMINES NOT GIVING GOOD MELT FLOW AS ADDITIVES AT HIGH CONCENTRATIONS TO A SULFONATED EPDM

Two samples of neutralized sulfonated EPDM prepared in the manner described in Example 1, were plasticized with N,N'-diphenyl-p-phenylenediamine, and with triphenylamine in the Brabender Plasticorder described in Example 2. The concentrations were 15.6 and 13.2 wt. percent respectively. In the mixing of these additives into the non-plasticized gum, the material was slow to fuse, and when fusion occurred the melts were quite tough and they tended to break into chunks during mixing rather than forming a smooth coherent melt within the mixer. Also, mixing times tended to be longer with these tough materials. However, in spite of the mixing difficulties, it appeared that satisfactory homogeneity was obtained in the mix, and the materials removed from the mixer appeared to be uniform. Melt flow measurements were made at 190°C. for these materials according to the procedures of Example 3.

The melt flow rates measured for N,N'diphenyl-p-phenylenediamine, and triphenylamine are listed in Table II. The flow rates are quite low — less than one-quarter of the lowest value for a plasticized material in Table I. This example by way of comparison shows a class of amines which has relatively poor effectiveness as a melt flow improver. In the N,N'diphenyl-p-phenylenediamine both of the nitrogen atoms are attached to two phenyl rings. In the triphenylamine, of course, the nitrogen atom is attached to three phenyl rings. Apparently, when the nitrogen atom is attached to two or more phenyl rings it becomes a less effective melt flow improver.

TABLE II
SOME TYPES OF AMINES NOT GIVING GOOD MELT FLOW AS ADDITIVES AT HIGH CONCENTRATIONS TO A SULFONATED EPDM

| Additive | Concentration (mmoles/100 g of gum) | Concentration Wt.% | Melt Flow Rate[1] (g/10 min) |
|---|---|---|---|
| N,N'diphenyl p-phenylenediamine | 71 | 15.6 | 0.055 |
| Triphenylamine | 62 | 13.2 | 0.014 |

[1] ASTM 1238—70, Standard Capillary, 190°C. (17.6 kg/cm² (250 psi).

EXAMPLE 5
SOME SELECTED AMINES GIVING RELATIVELY LOW TENSILE STRENGTH AS ADDITIVES AT HIGH CONCENTRATIONS TO A SULFONATED EPDM

Samples of neutralized sulfonated EPDM prepared in the manner described in Example 1, were plasticized at high concentrations with various substituted amines in the manner described in Example 2. Melt flow and tensile measurements were made according to the procedures of Example 3. Results for these materials are shown in Table III. The materials listed in Table III are some amines which were found to have relatively low room temperature tensile strength. Three of these materials show unusually high melt flow rates at 190°C; however, they also have unusually low tensile strength. Apparently the cause of the relatively low room temperature tensile strengths for these materials is that they continue to be very effective plasticizers even at room temperature. All of these four additives have melting points either only slightly above room temperature or below room temperature, and apparently at room temperature where the tensile measurements were made they are not appreciably phase separated from the polymer phase, so they continue to interact with and strongly plasticize the ionic polymer. This causes the materials to yield and break at relatively low forces. Di and tri alkyl amines seem to be particularly effective melt flow improvers for sulfonated EPDM: this is noteworthy in view of these relatively low dipole moments. However, many of the di and tri alkyl amines have relatively low melting points and they are not appreciably phase separated from the polymer at room temperature. These additives also seem to have more difficulty phase separating from the EPDM than the normal amines — perhaps because their structure makes proper packing more difficult so that their phase separation as a dispersed solid from the polymer phase often tends to occur further below their melting point than for normal alkyl amines. For these reasons di and tri alkyl amines in sulfonated elastomers are more suited to applications not requiring substantial strength, such as in caulking and coating applications or in solution applications.

In the case of the dodecylamine it appears that its chain length is too short to give very good tensile strength at room temperature. Longer chain length normal saturated amines, such as the arachidylamine (20 carbon chain) included in Table I give good tensile strength at room temperature, combined with good melt flow at processing temperatures.

TABLE III

SOME TYPES OF AMINES GIVING GOOD MELT FLOW BUT RELATIVELY LOW TENSILE STRENGTH AS ADDITIVES AT HIGH CONCENTRATIONS TO A SULFONATED EPDM

| Additive | Concentration | | Melt Flow Rate[1] | Tensile Properties[2] Room Temperature | | |
|---|---|---|---|---|---|---|
| | (Mmoles /100g gum) | Wt. % | (g /10 min) | Strength (psi) * | Elong. (%) * | Initial Modulus[3] (psi) * |
| Dodecylamine | 60 | 10.0 | 0.86 | 485 | 665 | 275 |
| Didodecylamine | 60 | 17.6 | 9.2 | 49 | >750 | 135 |
| N-methyloctadecylamine | 60 | 14.6 | 6.7 | 74 | >1000 | 235 |
| Tri-n-octylamine | 60 | 17.6 | 13.0 | 42 | 700 | 150 |

[1] ASTM 1238–70. Standard Capillary, 190°C., 17.6 kg/cm$^2$ (250 psi)

[2] Microdumbbell about 0.559 mm (22 mils) thick, 2.5 mm (0.1 inch) wide, 12.7 mm (0.5 inch) long straight test region Pulled at 51.4 mm (2 inches) minute

[3] Modulus determined from initial steepest slope of the stress-strain curve

* The equivalent value in kg/cm$^2$ can be obtained by multiplying by 0.07

EXAMPLE 6

COMPARISON OF PROPERTIES OF SULFONATED EPDM GUMS PLASTICIZED WITH HIGH CONCENTRATIONS OF VARIOUS FUNCTIONAL TYPES HAVING LONG ALKYL CHAINS

Samples of the nonplasticized gum described in Example 1 were mixed with high concentrations of additives having various different functional groups. Each of these additives contained a long alkyl chain to insure reasonably good compatibility with the gum at processing temperatures. The functional groups in Table IV include amine, ester, ketone, phthalate, alcohol, and nitrile as well as a $C_{18}$ wax for reference. Each material was incorporated in the non-plasticized lightly sulfonated EPDM prepared in Example 1, at a concentration of 60 meq. per 100 g of gum. The procedure described in Example 2 was used for incorporating the additives into the nonplasticized gum. The mixes which resulted in very low melt flow rate compositions (see Table IV) were difficult to mix and required longer times (perhaps 10 minutes or slightly longer) in the Brabender mixer. Also, these low melt flow rate compositions tended to mix as chunks rather than forming a coherent sheet or melt within the mixer. For example, the nitrile and ketone plasticized samples were particularly difficult to mix. However, it appeared that adequate dispersion of the additive in each of the samples was accomplished, and the material removed from the mixer appeared to be uniform in all cases. Melt flow rates and tensile measurements were made on each of the samples using the procedures described in Example 3. The results are shown in Table IV.

The six additives with functional groups shown here all have dipole moments well above 0.6 Debyes, so the prior art does not distinguish between which will be the more effective additives; yet, when used at identical molar concentrations there is a difference of about a factor of 75 between the poorest and the best flow improver here.

These results show that numerous organic chemicals having high dipole moments are relatively poor as melt flow improvers when used at high concentrations in a sulfonated elastomer. It is noteworthy that the amine in Table IV has one of the lowest dipole moments of the functional groups listed there, yet it is the most effective plasticizer by far.

TABLE IV

COMPARISON OF VARIOUS FUNCTIONAL TYPES WITH LONG ALKYL CHAINS AS ADDITIVES TO A ZINC NEUTRALIZED SULFONATED EPDM

| Additive | Concentration | | Melt Flow Rate[1] (g/10 min) | Tensile Properties[2] Room Temperature | | |
|---|---|---|---|---|---|---|
| | (meq/100g gum) | Wt. % | | Strength (psi)* | Elong. (%) | Initial Modulus[3] (psi)* |
| Arachidylamine | 60 | 15.2 | 1.5 | 1520 | 585 | 815 |
| Butylstearate | 60 | 17.0 | 0.10 | 670 | 480 | 300 |
| 6-undecanone | 60 | 9.3 | 0.02 | 620 | 310 | 395 |
| Didodecyl phthalate | 60 | 23.1 | 0.15 | 555 | 425 | 265 |
| Octadecylalcohol | 60 | 13.9 | 0.36 | 1300 | 490 | 475 |
| Stearonitrile | 60 | 13.7 | 0.15 | 770 | 495 | 370 |
| Octadecane | 60 | 13.3 | 0.19 | 720 | 410 | 375 |
| None | | | 0.007 | 650 | 250 | 385 |

[1] ASTM 1238–70. Standard Capillary, 190°C, 17.6 kg/cm² (250 psi)

[2] Microdumbbell, about 0.559 mm (22 mils) thick, 2.55 mm (0.1 inch) wide, 12.7 mm (0.5 inch) long straight test region Pulled at 51.4 mm (2 inches) minute

[3] Modulus determined from initial steepest slope of the stress-strain curve

* The equivalent value in kg/cm² can be obtained by multiplying by 0.07

EXAMPLE 7

PREPARATION OF TEST SAMPLES, AND MEASUREMENT OF FLOW AND TENSILE PROPERTIES OF A LIGHTLY SULFONATED EPDM PLASTICIZED WITH VARIOUS SUBSTITUTED UREAS AT HIGH CONCENTRATIONS

Various substituted ureas were incorporated into samples of the neutralized sulfonated EPDM described in Example 1, using procedures similar to those described in Example 2. Excellent, homogeneous materials were obtained in each case. Test pads were made from each of these samples by compression molding at 177°C (350°F). The procedure was to preheat the empty mold plates in the press for a few minutes, then the material was put in the mold and the mold containing the material was preheated in the press with the mold plates slightly open for two minutes. Then the mold plates were pressed closed under a force of about 20 metric tons for two minutes. The samples were cooled in the molds under pressure for two minutes. Microtensile pads having a thickness of about 0.6 mm and test regions measuring 2.54 mm in width and 12.7 mm in length were cut from the test pads with a die. The samples were stored in closed dry bottles for one or more days prior to tensile testing.

Tensile strengths of the samples were measured with an Instron TM table model instrument, using a pulling speed of 51 mm per minute. Measurements were made at room temperature (25°C.), and also at a higher temperature to determine the usefulness of the materials at elevated temperature. In the measurements at elevated temperature, after being placed in the testing oven, a three minute waiting period was allowed before pulling to enable the sample to equilibrate with the oven temperature. The elevated temperature utilized in most measurements was 70°C.

Melt flow rates for the various materials were determined at 190°C. which is in the range of typical processing temperatures for lightly sulfonated EPDM. The melt index instrument specified in ASTM 1238—70 was used, with the standard capillary. The weight of the probe plus the added weight was 12.5 kilograms. Flow rates were measured electronically as probe displacement per minute, and these results were converted to grams per 10 minutes using a conversion factor.

The melt flow rates and tensile properties for the lightly sulfonated EPDM samples plasticized with various substituted ureas at high concentrations are shown in Table 1; properties of the non-plasticized lightly sulfonated EPDM gum are also shown in Table V for reference.

This example shows that a lightly sulfonated EPDM material plasticized with high concentrations of various substituted ureas results in tremendously improved melt flow rates, as compared with the non-plasticized material, for much better processability at fabrication temperatures. In addition, it can be seen from Table V that the tensile strengths are well above that of the non-plasticized gum. Therefore, it is clear that high concentrations of various substituted ureas can give a very desirable balance of good tensile properties combined with excellent melt flow at processing temperatures.

TABLE V

TENSILE AND MELT FLOW PROPERTIES OF A SULFONATED EPDM PLASTICIZED WITH VARIOUS SUBSTITUTED UREAS AT HIGH CONCENTRATIONS

| Additive | Concentration | | Melt Flow Rate[1] (g/10 min) | Tensile Properties[2] | | | | | |
|---|---|---|---|---|---|---|---|---|---|
| | | | | 25°C | | | 70°C | | |
| | (meq/100 g Gum) | Wt. % | | Strength (psi)* | Elong. (%) | Initial Modulus[3] (psi)* | Strength (psi)* | Elong. (%) | Initial Modulus (psi)* |
| Dodecylurea | 60 | 12.0 | 1.2 | 900 | 570 | 405 | 65 | 770 | 200 |
| Octadecylurea | 60 | 15.7 | 1.5 | 1950 | 505 | 645 | 80 | 845 | 210 |
| Dibenzylurea | 75 | 15.2 | 1.4 | 3505 | 515 | 1240 | 260 | 680 | 605 |
| Carbanilide | 75 | 13.7 | 0.31 | 2450 | 495 | 500 | 315 | 515 | 340 |
| None | – | – | 0.007 | 650 | 250 | 385 | 305 | 310 | 310 |

[1] ASTM 1238–70. Srandard Capillary, 190°C, 17.6 kgm (250 psi)

[2] Microdumbbell, about 0.559 mm (22 mils) thick, 2.5 mm (0.1 inch) wide, 12.7 mm (0.5 inch) long straight test region Pulled at 51.4 mm (2 inches) minute

[3] Modulus determined from initial steepest slope of the stress-strain curve

* The equivalent value in kg/cm² can be obtained by multiplying by 0.07

EXAMPLE 8

FLOW AND TENSILE PROPERTIES OF A SULFONATED EPDM GUM PLASTICIZED WITH SOME SUBSTITUTED UREAS AT DIFFERENT CONCENTRATIONS

Samples of neutralized sulfonated EPDM prepared as in Example 1 were plasticized with various levels of octadecylurea and dibenzylurea in the Brabender Plasticorder described in Example 2. The two octadecylurea samples were prepared in the manner described in Example 2, except of course, one of the mixes contained the lower 30 meq./100 g. level of octadecylurea. The dibenzylurea samples were prepared by a slightly different procedure. For the lowest level of dibenzylurea, 37 g of the non-plasticized gum described in Example 1 was added to the mixing head, and then 0.9 g of the additive was added. A mixing speed of 50 RPM was used for almost all of the mixing in the Brabender mixing head. In the case of the dibenzylurea additive, mixing was started at 160°C., but because of its higher melting point, temperatures of up to 177°C. were used during the mixing procedure. Three minutes after adding the dibenzylurea the material was mixing well and was well homogenized. At this point a small sample of about 6 g was removed from the melt through the gate of the mixing head. Then an additional 1.88 g of the dibenzylurea was added, and additional non-plasticized sulfonated EPDM gum was added to fill the mixing head. This material was mixed until it was mixing well, and the torque reading had stabilized; a total of about three minutes, and then a second sample of about 6 g was taken. Calculations of wt. percent additive for this sample took into consideration the sample previously removed, as well as the additional additive and non-plasticized gum added after the earlier sample was taken. After the second sample was removed and weighed, an additional 5.25 g of the dibenzylurea was added and also additional non-plasticized gum to adequately fill the Brabender mixing head so that the gate was just barely bouncing. The amount of non-plasticized gum needed was determined by running the mixing head for a short time (roughly 15 seconds) and observing whether the gate was bouncing slightly — indicating a filled mixing head. After about three minutes mixing at this highest concentration of additive, the mixing torque had stabilized, the sample was well homogenized, and the full sample was removed from the mixing head and sheeted out with a single pass through a 100°C. two-roll mill having a roll separation of about 1 mm (0.04 inches).

The concentrations of dibenzylurea were 2.4, 5.8 and 15.2 wt.%. Satisfactory mixing was achieved at all concentrations, though the melt was considerably tougher at the lowest concentration. Tensile properties and melt flow rates at 190°C. are shown in Table VI, along with the non-plasticized sulfonated gum for reference.

This example shows that as the concentration of additive is increased for these plasticizers, there is a dramatic increase in the melt flow rate. The higher flow rates are very desirable for rapid fabrication techniques, such as the high speed extrusion of articles, and for fast cycle times and adequate mold filling injection molding operations. The higher melt flow rates resulting from the high concentrations of additives also result in correspondingly greater melt flow rates in compounds made from these gums — such as, for example, compounds with oil and fillers, or blends with plastics. Thus, a substantial gain in processability of compounds is achieved through the use of high concentrations of these plasticizers, in the same way as a substantial gain in processability of the gums was illustrated in these samples.

For the dibenzylurea additive of this example, large increases in melt flow rate are observed in Table VI as the concentration increases from 2.4 to 15.2 wt.%. While the melt flow rate is increasing so greatly with increases in concentration, we see that the tensile strength at the highest concentration of over 15 wt.% is above 24—6 kg/cm² (3500 psi) which is an extremely good tensile strength, and more than 5 times that of the unplasticized sulfonated EPDM gum. This tensile strength is considerably greater than the tensile strength at 5.8 wt.% additive — about 50% more. This result is quite surprising in view of the prior art which teaches that tensile properties deteriorate as additive concentrations increase passed 6 wt.%. Indeed, there was a substantial decrease in tensile strength for the dibenzylurea additive in going from 2.4 to 5.8 wt.% in agreement with the exceptions of prior art; however, as concentration is increased to 15 wt.% additive, a tensile strength even superior to that at the lower concentrations is obtained. Therefore, it is seen that concentrations of above 5 parts per hundred wt.% can result in particularly excellent room temperature tensile strength and outstanding melt flow rates at processing temperature (e.g., excellent processability), for a resultant very excellent balance of tensile properties and melt processability.

For the concentrations of octadecylurea given in Table VI there is more than a 250% increase in melt flow rate as a result of going from 7.8 to 15.7 wt.% of additive; and there is a change in tensile strength of less than 20%. Since the higher concentration of octadecylurea results in only slightly reduced and still quite satisfactory tensile strength while causing a very substantial increase in melt flow, the overall property/rheology balance of the material is markedly increased.

TABLE VI

PROPERTIES OF A SULFONATED EPDM GUM[4] PLASTICIZED WITH SOME SUBSTITUTED UREAS AT DIFFERENT CONCENTRATIONS

| Additive | Concentration | | Melt Flow Rate[1] (g/10 min) | Tensile Properties[2] (Room Temperature) | | |
|---|---|---|---|---|---|---|
| | (meq/100 g) | Wt. % | | Strength (psi)* | Elong. (%) | Initial Modulus[3] (psi)* |
| Octadecylurea | 30 | 7.8 | 0.41 | 2355 | 520 | 520 |
| Octadecylurea | 60 | 15.7 | 1.5 | 1950 | 505 | 645 |
| Dibenzylurea | 10.2 | 2.4 | 0.09 | 3175 | 475 | 655 |
| Dibenzylurea | 25.6 | 5.8 | 0.5 | 2360 | 455 | 735 |
| Dibenzylurea | 74.6 | 15.2 | 1.4 | 3505 | 515 | 1240 |
| None | – | – | 0.007 | 650 | 250 | 385 |

[1] ASTM 1238–70, Standard Capillary, 190°C, 17.6 kg/cm² (250 psi)

[2] Microdumbbell, about 0.559 mm (22 mils) thick, 2.5 mm (0.1 inch) wide, 12.7 mm (0.5 inch) long straight test region Pulled at 51.4 mm (2 inches) minute

[3] Modulus determined from initial steepest slope of the stress-strain curve

[4] The nonplasticized gum is the material described in Example 1; (Zinc acetate nautralized, 32 meq. of sulfonation per 100 gg of gum)

* The equivalent value in kg/cm² can be obtained by multiplying by 0.07

EXAMPLE 9

PHYSICAL PROPERTIES OF A SULFONATED EPDM PLASTICIZED WITH VARIOUS SUBSTITUTED THIOUREAS AT HIGH CONCENTRATION

Various substituted ureas were incorporated into samples of the neutralized sulfonated EPDM described in Example 1, using procedures similar to those described in Example 2. Excellent homogeneity was obtained in each of the plasticized materials. Test samples were prepared and room temperature tensile measurements were made using the procedures described in Example 7. Melt flow rate measurements were also made using the technique described in Example 7. The melt flow rates and tensile properties for the sulfonated EPDM samples plasticized with various substituted thioureas at high concentrations are shown in Table VII.

This example shows that the melt flow rates for these gums plasticized with various thioureas are excellent. The melt flow rates of the materials in Table III are roughly 200 times greater than that of the non-plasticized gum into which they were incorporated. The tensile properties of the gums plasticized with various substituted thioureas are comparable to, or somewhat greater than that of the non-plasticized gum. However, the tensile strengths are not as outstanding as for some of the substituted ureas listed in Table V. Therefore, preferred applications for sulfonated elastomers plasticized with these particular substituted thioureas would involve high rates of fabrication such as extrusion or injection molding where high melt flow rates would be at a premium, but the fabricated articles shouldn't require outstanding tensile strength; for example, some possible applications are shock absorbers or rubber protective mats.

TABLE VII

TENSILE AND MELT FLOW PROPERTIES OF A SULFONATED EPDM PLASTICIZED WITH VARIOUS SUBSTITUTED THIOUREAS AT HIGH CONCENTRATION

| Additive | Concentration | | Melt Flow Rate[1] (g /10 min) | Tensile Properties[2] (Room Temperature) | | |
|---|---|---|---|---|---|---|
| | (meq /100 g) | Wt. % | | Strength (psi) * | Elong. (%) | Initial Modulus[3] (psi) * |
| 1,3 didodecyl-2-thiourea | 60 | 19.8 | 1.3 | 1155 | 670 | 420 |
| N,N' di-P-tolylthiourea | 60 | 13.3 | 1.9 | 1025 | 590 | 390 |
| Thiocarbanilide | 67 | 13.3 | 1.6 | 580 | 685 | 360 |
| None | – | – | 0.007 | 650 | 250 | 385 |

[1] ASTM 2138–70, Standard Capillary, 190°C, 17.6 kg/$cm^2$ (250 psi)

[2] Microdumbbell, about 0.559 mm (22 mils) thick, 2.5 mm (0.1 inch) wide, 12.7 mm (0.5 inch) long straight test region Pulled at 51.4 mm (2 inches) minute

[3] Modulus determined from initial steepest slope of the stress-strain curve

* The equivalent value can be obtained by multiplying by 0.07

EXAMPLE 10

COMPARISON OF PROPERTIES OF SULFONATED EPDM GUMS PLASTICIZED WITH HIGH CONCENTRATIONS OF VARIOUS FUNCTIONAL TYPES HAVING LONG ALKYL CHAINS

Samples of the non-plasticized gum described in Example 1 were mixed with high concentrations of additives having various different functional groups. Each of these additives contained a long alkyl chain to insure reasonably good compatibility with the gum at processing temperatures. The functional groups in Table VIII include urea, ester, ketone, phthalate, alcohol and nitrile, as well as a $C_{18}$ wax for reference. Each material was incorporated in the non-plasticized lightly sulfonated EPDM prepared in Example 1, at a concentration of 60 meq. per 100 g of gum. The procedure described in Example 2 was used for incorporating the additives into the non-plasticized gum. The mixes which resulted in very low melt flow rate compositions (see Table VIII) were difficult to mix and required longer times (perhaps 10 minutes or slightly longer) in the Brabender mixer. Also, these low melt flow rate compositions tended to mix as chunks rather than forming a coherent sheet or melt within the mixer. For example, the nitrile and ketone plasticized samples were particularly difficult to mix. However, it appeared that adequate dispersion of the additive in each of the samples was accomplished, and the material removed from the mixer appeared to be uniform in all cases. Melt flow rates and tensile measurements were made on each of the samples using the procedures described in Example 9. The results are shown in Table X.

The six additives with functional groups shown here all have dipole moments well above 0.6 Debyes, so the prior art does not distinguish between which will be the more effective additives; yet, when used at identical molar concentrations, there is a difference of about a factor of 75 between the poorest and the best flow improver here.

These results show that numerous organic chemicals having high dipole moments are relatively poor as melt flow improvers when used at high concentration in sulfonated EPDM. The substituted ureas and thioureas are very effective melt flow improvers for sulfonated EPDM when used at high concentrations, and their excellent effectiveness as compared with many other functional additives could not be anticipated from the prior art.

TABLE VIII

COMPARISON OF VARIOUS FUNCTIONAL TYPES HAVING LONG ALKYL CHAINS AS ADDITIVES TO A ZINC NEUTRALIZED SULFONATED EPDM

| Additive | Concentration | | Melt Flow Rate[1] | Tensile Properties[2] (Room Temperature) | | |
|---|---|---|---|---|---|---|
| | (meq/100 g gum) | Wt. % | (g/10 min) | Strength (psi)* | Elong. (%) | Initial Modulus[3] (psi)* |
| Octadecylurea | 60 | 15.7 | 1.5 | 1950 | 505 | 645 |
| Butylstearate | 60 | 17.0 | 0.10 | 670 | 480 | 300 |
| 6-undecanone | 60 | 9.3 | 0.02 | 620 | 310 | 395 |
| Didodecyl phthalate | 60 | 23.1 | 0.15 | 555 | 425 | 265 |
| Octadecylalcohol | 60 | 13.9 | 0.36 | 1300 | 490 | 475 |
| Stearonitrile | 60 | 13.7 | 0.15 | 770 | 495 | 370 |
| Octadecane | 60 | 13.3 | 0.19 | 720 | 410 | 375 |

[1] ASTM 1238–70, Standard Capillary, 190°C, 17.5 $kg/cm^2$ (250 psi)

[2] Microdumbbell, about 0.559 mm (22 mils) thick, 2.5 mm (0.1 inch) wide, 12.7 mm (0.5 inch) long straight test region
Pulled at 51.4 mm (2 inches) minute

[3] Modulus determined from initial steepest slope of the stress-strain curve

* The equivalent value in $kg/cm^2$ can be obtained by multiplying by 0.07

**Claims**

1. An elastomeric composition comprising a neutralized sulphonated elastomeric polymer having 10 to 60 meq. sulphonate groups per 100 grams of said sulphonated elastomeric polymer, said sulphonate groups being neutralized with metal cations and an organic nitrogen-containing plasticiser characterised in that said plasticiser comprises 5 to 75 parts by weight of an organic urea or thiourea having the formula

$$R_1NH-\underset{\underset{A}{\|}}{C}-NHR_2$$

per 100 parts of said neutralized sulphonated elastomeric polymer, wherein A is oxygen or sulphur and $R_1$ and $R_2$ are the same or different and are an alkyl group, an aralkyl group or an aryl group, provided that if $R_1$ and $R_2$ are both alkyl groups, then at least one of them must be a $C_{12}$ to $C_{22}$ alkyl group, provided that the urea or thiourea is solid at ambient temperature.

2. A composition according to claim 1 wherein said urea is dibenzylurea.

3. A composition according to either of claims 1 and 2 which contains at least 8 parts by weight of said urea or thiourea.

4. A composition according to any one of the preceding claims wherein said organic urea or thiourea has a melting point of at least 70°C.

5. An elastomeric composition comprising a neutralized sulphonated elastomeric polymer having 10 to 60 meq. sulphonate groups per 100 grams of said sulphonated elastomeric polymer, said sulphonate groups being neutralized with metal cations and an organic nitrogen-containing plasticiser characterised in that said plasticiser comprises 8 to 75 parts by weight of a primary n-alkyl amine based on 100 parts of said neutralized sulphonated elastomeric polymer, wherein the alkyl group of said n-alkylamine has at least 20 carbon atoms per molecule, provided that the n-alkyl amine is solid at ambient temperature.

6. A composition according to claim 5 wherein said amine is arachidylamine or behenylamine.

7. A composition according to either of claims 5 and 6 which contains at least 10 parts by weight of said amine.

8. A composition according to any one of claims 5 to 7 wherein said amine has a melting point of at least 70°C.

9. A composition according to any one of the preceding claims wherein said neutralized sulphonated elastomeric polymer is formed from Butyl rubber being a copolymer formed from 70 to 95.5 wt.% of a $C_4$ to $C_7$ isoolefin and 0.5 to 30 wt.% of a $C_4$ to $C_{14}$ conjugated multiolefin and having 0.2 to 10 wt.% combined multiolefin or an ethylene-propylene-diene (EPDM) terpolymer having 1 to 10 wt.% olefinic unsaturation.

10. A composition according to claim 9, wherein said EPDM terpolymer comprises 40 to 80 wt.% of ethylene, 10 to 59 wt.% of propylene and 1 to 10 wt.% of a non-conjugated diene.

11. A composition according to claim 10 wherein said non-conjugated diene is 1,4-hexadiene, dicyclopentadiene, an alkylidene substituted norbornene, an alkenyl substituted norbornene or tetrahydroindene.

12. A composition according to claim 11 wherein said non-conjugated diene is 5-ethylidene-2-norbornene.

13. A composition according to any one of the preceding claims wherein said metal cation of said metal neutralized sulphonated polymer is a metal of groups I—A, II—A, I—B or II—B of the Periodic Table of Elements, lead, antimony or iron.

14. A composition according to claim 13 wherein said metal cation is zinc.

**Revendications**

1. Composition élastomere comprenant un polymère élastomère sulfoné, neutralisé, ayant de 10 à 60 méq. de groupes sulfonate par 100 g dudit polymère élastomère sulfoné, lesdits groupes sulfonate étant neutralisés avec des cations métalliques, et un plastifiant organique contenant de l'azote, caractérisée en ce que ledit plastifiant contient de 5 à 75 parties en poids d'une urée ou d'une thiourée organique répondant à la formule

$$R_1NH-\underset{\underset{A}{\|}}{C}-NHR_2$$

pour 100 parties dudit polymère élastomère sulfoné, neutralisé, dans laquelle A est l'oxygène ou le soufre, et $R_1$ et $R_2$ sont indentiques ou différents et représentent un groupe alkyle, un groupe aralkyle ou un groupe aryle, à condition que, si $R_1$ et $R_2$ sont tous les deux des groupes alkyle, au moins l'un d'entre

eux soit un groupe alkyle en $C_{12}$—$C_{22}$, et à la condition que l'urée soit solide à la température ambiante.

2. Composition selon la revendication 1, caractérisée en ce que l'urée est la dibenzylurée.

3. Composition selon l'une des revendications 1 ou 2, caractérisée en ce qu'elle contient au moins 8 parties en poids de ladite urée ou thiourée.

4. Composition selon l'une quelconque des revendications précédentes, caractérisée en ce que l'urée ou la thiourée organique a un point de fusion d'au moins 70°C.

5. Composition élastomère comprenant un polymère élastomère sulfoné, neutralisé, ayant de 10 à 60 méq. de groupes sulfonate par 100 g dudit polymère élastomère sulfoné, lesdits groupes sulfonate étant neutralisés avec des cations métalliques, et un plastifiant organique contenant de l'azote, caractérisée en ce que ledit plastifiant contient de 8 à 75 parties en poids d'une n-alkylamine primaire pour 100 parties dudit polymère élastomère sulfoné, neutralisé, le groupe alkyle de ladite n-alkylamine ayant au moins 20 atomes de carbone par molécule, à condition que la n-alkylamine soit solide à la température ambiante.

6. Composition selon la revendication 5, caractérisée en ce que ladite amine est l'arachidylamine ou la béhénylamine.

7. Composition selon l'une des revendications 5 ou 6, caractérisée en ce qu'elle contient au moins 10 parties en poids de ladite amine.

8. Composition selon l'une quelconque des revendications 5 à 7, caractérisée en ce que ladite amine a un point de fusion d'au moins 70°C.

9. Composition selon l'une quelconque des revendications précédentes, caractérisée en ce que le polymère élastomère sulfoné, neutralisé, est formé à partir de caoutchouc butyle qui est un compolymère de 70 à 95,5% en poids d'une isooléfine en $C_4$—$C_7$ et de 0,5 à 30% en poids d'une multioléfine conjuguée en $C_4$—$C_{14}$ en ayant de 0,2 à 10% en poids de multioléfine combinée, ou d'un terpolymère d'éthylène-propylène-diène (EPDM) ayant de 1 à 10% en poids d'insaturation oléfinique.

10. Composition selon la revendication 9, caractérisée en ce que le terpolymère d'EPDM comprend de 40 à 80% en poids d'éthylène, de 10 à 59% en poids de propylène et de 1 à 10% en poids d'un diène non-conjugué.

11. Composition selon la revendication 10, caractérisée en ce que la diène non-conjugué est le 1,4-hexadiène, le dicyclopentadiène, un norbornène substitué par un groupe alkylidène, un norbornène substitué par un groupe alcényle ou du tétrahydroindène.

12. Composition selon la revendication 11, caractérisée en ce que le diène non-conjugué est le 5-éthylidène-2-norbornène.

13. Composition selon l'une quelconque des revendications précédentes, caractérisée en ce que le cation métallique dudit polymère sulfoné, neutralisé, est un métal des groupes I—A, II—A I—B ou II—B de la Classification Périodique des Eléments, le plomb, l'antimoine ou le fer.

14. Composition selon la revendication 13, caractérisée en ce que le cation métallique est le zinc.

**Patentansprüche**

1. Elastomere Zusammensetzung, die ein neutralisiertes sulfoniertes, elastomeres Polymer mit 10 bis 50 Milliäquivalenten Sulfonatgruppen je 100 g des sulfonierten, elastomeren Polymers, wobei die Sulfonatgruppen mit Metallkationen neutralisiert sind, und einen organischen stickstoffhaltigen Weichmacher enthält, dadurch gekennzeichnet, daß sie als Weichmacher 5 bis 75 Gewichtsteile eines organischen Harnstoffs oder Thioharnstoffs mit der Formel

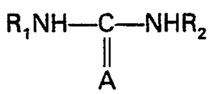

je 100 Teile des neutralisierten, sulfonierten, elastomeren Polymers enthält, wobei A Sauerstoff oder Schwefel ist und $R_1$ und $R_2$ gleich oder verschieden sind und eine Alkylgruppe, eine Aralkylgruppe oder eine Arylgruppe, wobei in dem Fall, daß $R_1$ und $R_2$ beide Alkylgruppen sind, mindestens einer von beiden eine $C_{12}$—$C_{22}$-Alkylgruppe sein muß, bedeuten, vorausgesetzt, daß der Harnstoff oder Thioharnstoff bei Raumtemperatur fest ist.

2. Zusammensetzung nach Anspruch 1, dadurch gekennzeichnet, daß der Harnstoff Dibenzylharnstoff ist.

3. Zusammensetzung nach jedem der Ansprüche 1 und 2, dadurch gekennzeichnet, daß sie mindestens 8 Gewichtsteile des Harnstoffs oder Thioharnstoffs enthält.

4. Zusammensetzung nach jedem der vorangegangenen Ansprüche, dadurch gekennzeichnet, daß der organische Harnstoff oder Thioharnstoff einen Schmelzpunkt von mindestens 70°C besitzt.

5. Elastomere Zusammensetzung, die ein neutralisiertes, sulfoniertes, elastomeres Polymer mit 10 bis 60 Milliäquivalenten Sulfonatgruppen je 100 g des sulfonierten, elastomeren Polymers, wobei die Sulfonatgruppen mit Metallkationen neutralisiert sind, und einen organischen stickstoffhaltigen Weichmacher enthält, dadurch gekennzeichnet, daß sie als Weichmacher 8 bis 75 Gewichtsteile eines primären n-Alkylamins bezogen auf 100 Teile des neutralisierten, sulfonierten, elastomeren Polymers

enthält, wobei die Alkylgruppe des n-Alkylamins mindestens 20 Kohlenstoffatome je Molekül aufweist, vorausgesetzt, daß das n-Alkylamin bei Raumtemperatur fest ist.

6. Zusammensetzung nach Anspruch 5, dadurch gekennzeichnet, daß das Amin Arachidylamin oder Behenylamin ist.

7. Zusammensetzung nach jedem der Ansprüche 5 und 6, dadurch gekennzeichnet, daß sie mindestens 10 Gewichtsteile des Amins enthält.

8. Zusammensetzung nach jedem der Ansprüche 5 bis 7, dadurch gekennzeichnet, daß das Amin einen Schmelzpunkt von mindestens 70°C besitzt.

9. Zusammensetzung nach jedem der vorangegangenen Ansprüche, dadurch gekennzeichnet, daß das neutralisierte, sulfonierte, elastomere Polymer aus Butylgummi, welches ein Copolymer aus 70 bis 95,5 Gew.% eines $C_4$—$C_7$-Isoolefins und 0,5 bis 30 Gew.% eines konjugierten $C_4$—$C_{14}$-Multiolefins ist und 0,2 bis 10 Gew.% kombiniertes Multiolefin enthält, oder aus einem Ethylen-Propylen-Dien (EPDM)-Terpolymer mit 1 bis 10 Gew.% olefinischer Ungesättigtheit hergestellt ist.

10. Zusammensetzung nach Anspruch 9, dadurch gekennzeichnet, daß das EPDM-Terpolymer 40 bis 80 Gew.% Ethylen, 10 bis 59 Gew.% Propylen und 1 bis 10 Gew.% eines nicht-konjugierten Diens enthält.

11. Zusammensetzung nach Anspruch 10, dadurch gekennzeichnet, daß das nicht-konjugierte Dien 1,4-Hexadien, Dicyclopentadien, ein alkylidensubstituiertes Norbornen, ein alkenylsubstituiertes Norbornen oder Tetrahydroinden ist.

12. Zusammensetzung nach Anspruch 12, dadurch gekennzeichnet, daß das nicht-konjuierte Dien 5-Ethyliden-2-Norbornen ist.

13. Zusammensetzung nach jedem der vorangegangenen Ansprüche, dadurch gekennzeichnet, daß das Metallkation das metallneutralisierten, sulfonierten Polymers ein Metall der Gruppen I—A, II—A, I—B oder II—B des periodischen Systems der Elemente, Blei, Antimon oder Eisen ist.

14. Zusammensetzung nach Anspruch 13, dadurch gekennzeichnet, daß das Metallkation Zink ist.